# EUROPEAN PATENT APPLICATION

(11) **EP 4 670 819 A1**
(43) Date of publication of application: **31.12.2025**
(21) Application number: 24184549.4
(22) Date of filing: 26.06.2024
(51) Int. Cl.: B01D 53/04

(54) **A PROCESS FOR CAPTURING CO2 FROM ATMOSPHERE**

(71) Applicant: CASALE SA, 6900 Lugano (CH)
(72) Inventor: FILIPPI, Ermanno, 6976 Castagnola (CH); ZARDI, Riccardo Umberto, 6932 Breganzona (CH)
(74) Representative: M. Zardi & Co S.A.

(57) **Abstract**

A process to capture CO₂ contained in the atmospheric air, the method comprising passing a flow of atmospheric air through at least one tunnel, such as a tunnel in a mountain, in the presence of a natural induced air convection where the inlet and the outlet of the tunnel are in different locations and have a different altitude; providing at least one solid sorbent with affinity for CO₂ in the tunnel to remove CO₂ from the air flow, wherein the CO₂-depleted air leaves the tunnel and returns to atmosphere, and CO₂ transferred to the sorbent is cyclically removed from the sorbent to obtain a CO₂-containing stream.

## Description

### Field of application

The present invention relates to a process for capturing the carbon dioxide (CO₂) from air, enabling the removal of CO₂ from the atmosphere and therefore trying to mitigate the effect associated with the elevated atmospheric CO₂ concentration.

### Prior art

The rising level of CO₂ in the atmosphere is a well-known concern, in particular in terms of its direct impact on climate. This has led to growing interest in methods of offsetting or reversing the rise in atmospheric carbon by selectively capturing large amounts of CO₂ from air.

The conventional carbon capture initiatives focus on capturing CO₂ near the point of generation, for example by processing flue gas of fossil-fuel burning plants. This approach has the advantage that the CO₂ is already fairly concentrated and therefore easier to capture; on the other hand, it cannot be used to address small, distributed sources of emissions, such as vehicles and home heating, and is not suitable to reduce CO₂ already released into the atmosphere.

The direct air capture (DAC) of CO₂ is a known concept wherein CO₂ is removed directly from ordinary atmospheric air, for example using a solid sorbent. The DAC technique however poses an array of challenges including the need to separate the very dilute CO₂ (around 420 ppm) in the atmosphere from large volumes of air and producing a concentrated CO₂ suitable for storage or industrial use. Large scale application of DAC for massive quantities of CO₂ (in the order of MMT per year) is not yet available due to the fact that the mass of CO₂ adsorbed is small relative to the sorbent volume. Therefore, very large volumes of sorbent are needed for DAC and large quantities of gas need to be treated to capture considerable amount of CO₂ with a consequent high energy consumption for moving these large quantities through beds of absorbants. Another problem is that when scale-up of small units of DAC are implemented by having several units nearby, the CO₂ -depleted air is likely to reenter into some downwind unit decreasing the efficiency of the process.

It is desirable to find a way to collect a large amount of CO₂ from air in efficient way. In addition to geological storage, CO2 is interesting as a valued good in industry, for instance in the production of synthetic fuels like methanol and susatainable aviation fuels.

### Summary of the invention

The aim of this invention is to propose a novel method to capture CO₂ from atmospheric air, which is economically suitable to a large-scale application of DAC. A further aim is to provide a concentrated CO₂ product adapted to storage or industrial use.

The aims are reached with a process according to claim 1.

The process comprises passing a flow of atmospheric air through at least one tunnel provided with at least one solid sorbent with affinity for CO₂. The airflow travelling from the inlet to the outlet of the tunnel passes through said at least one sorbent and CO₂ contained in said flow of air is transferred to the sorbent obtaining a CO₂-depleted air; the CO₂-depleted air leaves the tunnel and returns to atmosphere; the CO₂ transferred to the sorbent is cyclically removed from the sorbent and a CO₂-containing product stream is withdrawn for storage or for further use.

Said tunnel may be a natural or artificial tunnel in a mountain. Preferably, the inlet of the tunnel and the outlet of the tunnel have a different altitude. In preferred embodiments, the invention takes advantage of natural formations of the surface of the Earth such as a mountain or a hill, to provide tunnel inlet/outlet at a different altitude. The different altitude may provide a natural circulation of air within the tunnel, due to the different air temperature between inlet and outlet; the airflow through the tunnel, in accordance, can be partially or fully driven by natural circulation. The difference of temperature between the inlet and outlet can be positive or negative and the naturally-induced airflow can be directed upward or downward in the tunnel. If the natural circulation is not sufficient for the desired airflow, a forced circulation with a suitable fan system can be implemented. A forced circulation may provide part or all of the driving force of the airflow in the tunnel.

### Description of the invention

In a general embodiment, the tunnel connects an air inlet and air outlet located at a different altitude. The difference in altitude between the outlet and the inlet of the tunnel is preferably at least 100 m, preferably at least 500 m, more preferably at least 1000 m. The tunnel may connect a valley location to a higher location or a summit location in a natural formation such as a mountain. The tunnel may extend within a mountain and/or below ground level, according to different locations. According to different embodiments, either the inlet or the outlet can be located at the highest altitude, i.e. the air flow in the tunnel may be upward or downward.

The natural circulation, if provided, is driven by a different temperature of the ambient air at the inlet and outlet of the tunnel. In practical applications, said difference is preferably at least 3 °C, more preferably at least 5 °C and even more preferably at least 10 °C, to provide a significant driving force of the airflow. In embodiments where the tunnel traverses a natural formation such as a mountain, the invention may take advantage of the warmer rock temperature to promote a natural convection of air through the tunnel.

In some embodiments, the process of the invention includes the step of heating the air flow at the inlet of the tunnel or throughout a portion of the tunnel before or after passage through the sorbent. Heating can be made by passing the air flow through a heat exchanger or by using a natural heat source when available.

In some embodiments, rock temperature is exploited as heat source for heating the airflow.

The orientation of the tunnel may vary depending on various embodiment and the local morphology of the territory. In a preferred embodiment, the tunnel includes an intake section and an active section where the sorbent is located. The intake section is preferably horizontal or substantially horizontal; the active section is preferably vertical or substantially vertical. A vertical portion of the tunnel is preferred to enhance the convection of air.

The shape or orientation of the tunnel may be modified to make room to accommodate equipment and air flow according to process specifications.

An interesting embodiment of the invention makes use of the natural temperature of rocks in the core of a mountain, being warmer than atmospheric air, for the heating of the air flow through the tunnel. In an embodiment, for example, the air flow is heated in the intake section of the tunnel by the surrounding walls thanks to the above-mentioned warmer temperature of the rocks.

It is also possible that rocks are colder than atmospheric air and in this case the air flow may be downward. For this case the process of CO₂ adsorption is still the same as hereafter described, depending on the flow characteristic ventilation might enhance the existing air flow or it might reverse the direction, to force an upward flow of air.

The process may include passing atmospheric air in a plurality of tunnels in parallel, each tunnel including at least one solid sorbent for CO₂. A parallel arrangement of tunnel increases the flow rate that can be processed; in addition, one tunnel may adsorb CO₂ while another tunnel is in the desorption stage, thus allowing continuous operation.

The CO₂ is removed from the air flow preferably by physical adsorption with a temperature-swing process (TSA) or pressure-swing process (PSA) or a combination of the two (PTSA). A TSA process is preferred. Both the PSA and TSA process requires a regeneration step during which the CO₂ captured by the sorbent is released. During the regeneration stage, the portion of tunnel where the sorbent is located is preferably sealed, to avoid loss of CO₂ in the atmosphere.

The process of removing CO₂ from air using a solid sorbent, as such, is known and does not need a detailed description. The process is generally a batch process but can be implemented with two or more parallel beds to work continuously.

In a TSA process, the regeneration is performed by heating the sorbent, optionally with a sweep gas such as inert or CO₂ in countercurrent to the adsorption flow. Various methods of heating the sorbent may be used. An interesting aspect of the invention is microwave heating of the sorbent during the regeneration stage (microwave-assisted desorption). Advantages of microwave heating include a precise heating reducing the heat waste. Desorption in a TSA may also be driven, preferably, by conductive heating or a combination of conductive heating and microwave heating.

CO2 is transferred essentially on the surface of the sorbent. The sorbent is preferably arranged in one or more beds. In some embodiments, the tunnel is fitted with a plurality of CO₂ sorbent beds. For example, in a preferred embodiment, several CO₂ sorbent beds are arranged one above the other in a vertical section of the tunnel, acting as a CO₂-capture chimney, to simplify the design and construction of each bed.

The CO₂ removed from the air can be stored locally or exported for other applications, for instance geological storage in underground sites or to industrial use. The uses of CO₂ include, among others,carbon neutral fuels, food industry and the production of urea.

The benefits of this invention are multiple. First of all, the invention scales up the DAC technology to large volumes in a non-land invasive way. It also prevents the problem of CO₂ depleted air to reenter into the DAC station, that would decrease the efficiency of the process. Moreover, it takes advantage of a natural induced convection air flow, therefore the ventilation power needed to run the process is reduced or even eliminated. Finally, using an unconventional heating method for the desorption process, like the microwaves assisted heating, the heat waste and dead volumes of conventional heating method is avoided.

### Example

To give a reference of some possible scenarios, three case studies are analyzed. Three different mountain locations in Switzerland are selected; registered climate data over 10 years are considered for the estimation of the size and dynamics the tunnel. The locations considered are the following where the numbers between parentheses give the altitude above sea level:
Sils - Corvatsch (1806 m - 3297 m),
Davos - Weissfluhjoch (1596 m - 2694 m),
Ulrichen - Grimsel hospiz (1348 m - 1988 m).

For all these studies, the calculation considers an imaginary tunnel in the mountain where the air enters from a location at the bottom of the valley. It is assumed that the tunnel directs towards the center of the mountain and then upwards to the mountain summit. The table below represents the measurements taken by weather stations in the locations of the case studies. The table includes also estimated air flow and equivalent CO2 treated.

**Table 1**

| Temperatures monthly avg [°C] | Sils / Corvatsch | Davos / Weissfluhjoch | Urlichen / Grimsel hospiz |
|---|---|---|---|
| Summer (average past 10 years) | 12.8 / 3.9 | 13.9 / 7.4 | 15.7 / 11.4 |
| Winter (average past 10 years) | -7.1 / -12.4 | -2.5 / -9.1 | -7.0 / -5.4 |
| Estimated flow of air for a 10m diameter [m³s⁻¹] | 20.6 | 17 | 13.8 |
| Equivalent CO2 treated [kTon_{CO2} year⁻¹] | 39.3 | 32.2 | 26.2 |

The results of Table 1 were obtained for the specific height difference of the locations and assuming a tunnel having a diameter of 10 m, constant along the tunnel.

In comparison the capture of the same amount of CO₂ (1 Mtons/year) with a conventional DAC installation would require a footprint (land use) of more than 100'000 m2 and typically in the range 100'000 to 300'000 m2. The above figures are estimated on the basis of the required sorbent volume and assuming a height of 3 meters. Moreover, moving the air with a compressor with a pressure increase of 0.05 bar, the power needed to capture 1 Mton of CO₂ in one year (178.9 ktons/h of air) is estimated to be 315 MW. With an electricity price of 50 €/MWh this alone would cost 138 €/ton CO₂ working at 8'000 hour per year. This considerable cost can be reduced or fully eliminated by the invention when using natural circulation of air.

### Description of the figures

Figure 1 represents a schematic implementation of the invention, according to an embodiment.
Fig. 2 is another sketch of an embodiment of the invention.
Figs. 3 to 5 illustrate an embodiment of a closing device to seal the adsorber for regeneration.

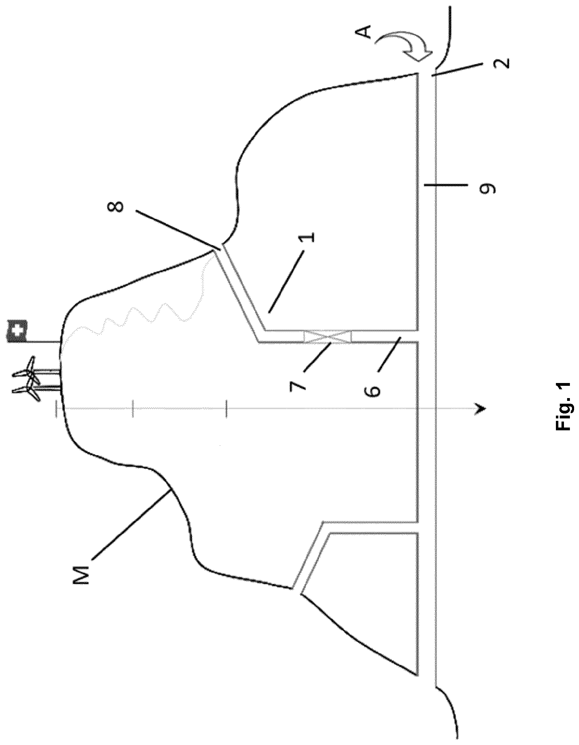

Fig. 1 illustrates a tunnel 1 in a mountain M. The tunnel 1 has a valley inlet 2 and an outlet 8 located at higher altitude than the inlet 2. The tunnel 1 includes a horizontal portion 9 and a vertical portion 6. In the portion 6, a bed of a solid sorbent 7 with a high affinity for CO₂ is located. The sorbent bed 7 may be installed in a suitable cartridge to contain the sorbent material.

An air flow A enters the tunnel 1 at the inlet 2 and traverses the sorbent bed 7, where CO₂ contained in the air is captured; CO₂-depleted air return to atmosphere via the outlet 8.

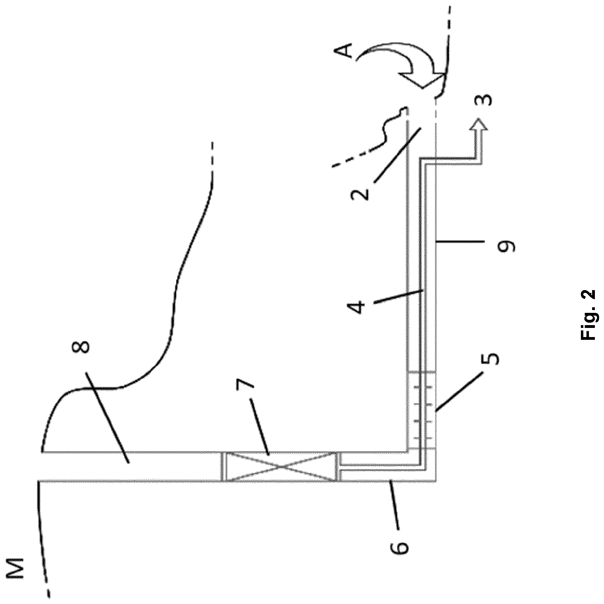

Fig. 2 illustrates an embodiment including a heat exchanger 5, situated in the horizontal portion of the tunnel 9, and a sorbent bed 7, situated in the vertical portion of the tunnel 6. The air from the atmosphere A enters the tunnel 1 from the inlet 2 and passes through the heat exchanger 5 to increase the temperature of the flow. The heated flow raises the tunnel thanks to convective lift and passes through the sorbent bed 7. The CO₂ captured by the sorbent is desorbed, creating a CO₂ rich stream 4, that is directed to a compression and storage unit 3. In a variant embodiment, the heat exchanger 5 may be located after (downstream) the sorbent bed 7.

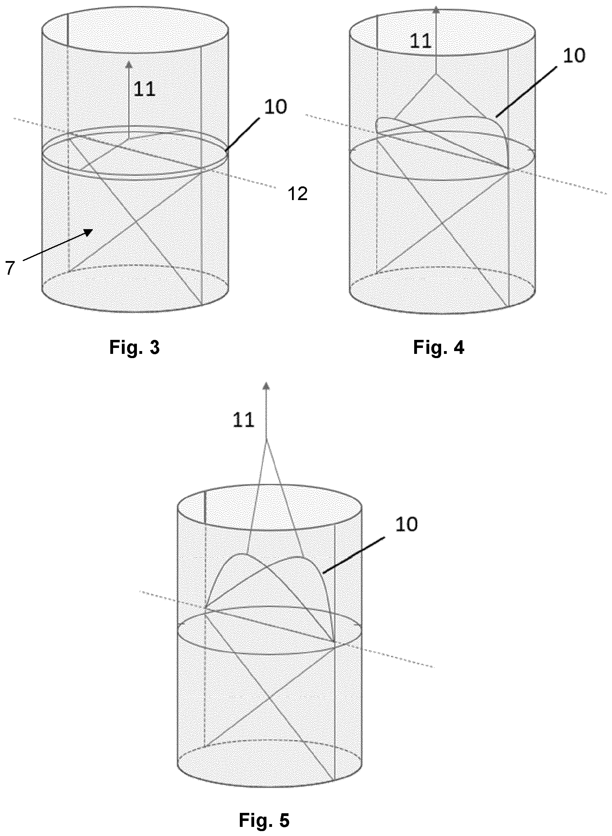

A suitable closing device is provided to seal the sorbent bed 7 during the regeneration step. Said closing device may be integrated with the cartridge containing the sorbent material. Figs. 3 to 5 illustrate an embodiment of said closing device. The closing device includes two flap doors 10 which open and close around a central hinge axis 12. The closing device is placed above the sorbent bed 7. The flap doors 10 are lifted by cables 11 to open the passage.

In Fig. 3 the doors 10 are fully closed to allow the desorption process. Fig. 4 shows the doors 10 partially open and Fig. 5 shows the doors 5 fully open during normal operation of the adsorption process.

## Claims

1. A process to capture CO₂ contained in the atmospheric air, the process comprising:
passing a flow of atmospheric air (A) through at least one tunnel (1);
providing at least one solid sorbent (7) with affinity for CO₂ in the tunnel;
wherein the airflow travelling from the inlet to the outlet of the tunnel passes through said at least one sorbent, and CO₂ contained in said airflow is transferred to the sorbent obtaining a flow of CO₂-depleted air;
the CO₂-depleted air leaves the tunnel and returns to atmosphere;
CO₂ transferred to the sorbent is cyclically removed from the sorbent and a CO₂-containing product stream is withdrawn.

2. A process according to claim 1 wherein the inlet of the tunnel and the outlet of the tunnel have a different altitude.

3. A process according to claim 2 wherein the inlet of the tunnel and the outlet of the tunnel have a different altitude due to natural different elevations, like in mountains, of the surface of Earth.

4. A process according to claim 2, or 3 wherein the inlet and outlet of the tunnel differ in altitude by at least 100 m, preferably at least 500 m, more preferably at least 1000 m.

5. A process according to any of the previous claims, wherein the airflow through the tunnel is driven at least partially by natural convection.

6. A process according to any of the previous claims, wherein the ambient temperature of air at the inlet of the tunnel differs from the ambient temperature of air at the outlet of the tunnel.

7. A process according to any of the previous claims, wherein the tunnel is an artificial tunnel or a natural tunnel.

8. A process according to any of the previous claims, including the step of heating the air flow throughout a portion of the tunnel.

9. A process according to claim 8 wherein heating the airflow is made by passing the airflow through a heat exchanger (6).

10. A process according to any of the previous claims wherein the tunnel is made in a natural formation of the surface of the Earth, including the step of heating the airflow by contact with the walls of the tunnel, wherein the walls of the tunnel are naturally warmer than air at the inlet of the tunnel.

11. A process according to any of the previous claims, wherein the tunnel includes an intake section which is horizontal or substantially horizontal, and an active section, where the at least one sorbent for CO₂ is located, which is vertical or substantially vertical.

12. A process according to any of the previous claims, wherein the at least one tunnel includes an array of tunnels arranged in parallel, the process including passing atmospheric air through said tunnels in parallel.

13. A process according to any of the previous claims wherein CO₂ is removed from the airflow with a temperature-swing process or a pressure-swing process or a combination of the two (TPSA).

14. A process according to any of the previous claims wherein during desorption of CO₂ from the sorbent, at least the portion of the tunnel including the sorbent is sealed to avoid loss of CO₂.

15. A process according to any of the previous claims wherein CO₂ is removed from the airflow by a temperature-swing process and desorption of CO₂ from the sorbent includes heating the sorbent materials, wherein heating the sorbent for desorption of CO2 include any of microwave-heating or conductive heating or a combination thereof.

16. A process according to any of the previous claims wherein the CO₂ removed from the air is stored locally or is exported for an industrial use.
